# FASCICULE DE BREVET EUROPEEN

(11) **EP 3 476 107 B1**
(45) Date de publication et mention de la délivrance du brevet: **20.10.2021**
(21) Numéro de dépôt: 17735209.3
(22) Date de dépôt: 12.06.2017
(51) Int. Cl.: H04L 29/12, H04L 29/06

(54) **PROCÉDÉ ET DISPOSITIF DE CONTRÔLE DE FLUX DE DONNÉES TRANSMIS SELON LE PROTOCOLE DNS (DOMAIN NAME SYSTEM)**
VERFAHREN UND VORRICHTUNG ZUR STEUERUNG EINES NACH DEM DOMÄNENNAMENSYSTEM(DNS)-PROTOKOLL ÜBERTRAGENEN DATENSTROMS
METHOD AND DEVICE FOR CONTROLLING DATA FLOW TRANSMITTED ACCORDING TO THE DNS PROTOCOL (DOMAIN NAME SYSTEM)

(30) Priorité: 23.06.2016 FR 1655843
(43) Date de publication de la demande: 01.05.2019
(73) Titulaire: ORANGE, 92130 Issy-les-Moulineaux (FR)
(72) Inventeur: GODIER, Julien, 31170 Tournefeuille (FR); HAMEL, Matthias, 31330 Grenade Sur Garonne (FR); MONTANUY, Olivier, 22700 Louannec (FR)
(74) Mandataire: Vidon Brevets & Stratégie
(86) Numéro de dépôt international: PCT/FR2017/051494
(87) Numéro de publication internationale: WO 2017/220884

(56) Documents cités:
- EP-A1- 3 007 411
- US-A1- 2007 204 040
- US-A1- 2016 099 852
- Greg Farnham: "Detecting DNS Tunneling", , 25 février 2013 (2013-02-25), pages 1-32, XP055362647, Extrait de l'Internet: URL:https://www.sans.org/reading-room/whit epapers/dns/detecting-dns-tunneling-34152 [extrait le 2017-04-06]
- ICHISE HIKARU ET AL: "Analysis of via-resolver DNS TXT queries and detection possibility of botnet communications", 2015 IEEE PACIFIC RIM CONFERENCE ON COMMUNICATIONS, COMPUTERS AND SIGNAL PROCESSING (PACRIM), IEEE, 24 août 2015 (2015-08-24), pages 216-221, XP032817243, DOI: 10.1109/PACRIM.2015.7334837
- Anonymous: "Response policy zone - Wikipedia", , 1 April 2016 (2016-04-01), pages 1-3, XP055736258, Retrieved from the Internet: URL:https://en.wikipedia.org/w/index.php?t itle=Response_policy_zone&oldid=713042647 [retrieved on 2020-10-02]

## Description

### 1. Domaine de l'invention

L'invention concerne le domaine des réseaux de télécommunications fixes et mobiles, et plus particulièrement les communications établies selon le protocole DNS (système de noms de domaine en français).

### 2. Art Antérieur

L'accès à un réseau de communication IP (Internet Protocol en anglais) géré par un opérateur n'est en général pas gratuit pour un utilisateur. En effet, l'accès à de tels services nécessite des ressources en termes de bande passante et d'infrastructure. L'opérateur du réseau de communication offre alors l'accès à son réseau IP en échange d'une compensation financière de l'utilisateur.

L'opérateur du réseau de communication IP peut par exemple proposer à l'utilisateur un abonnement pour accéder au réseau IP. Le prix de l'abonnement comprend alors l'accès au réseau IP, tel que l'Internet par exemple, et les communications nécessaires à un tel accès. Dans d'autres cas, l'utilisateur peut choisir de payer l'accès au réseau IP en fonction de son utilisation, en payant par exemple en fonction de la durée d'utilisation ou de la consommation de la bande passante.

Certaines communications sur un réseau IP peuvent cependant être émises gratuitement par l'utilisateur. Par exemple, lorsque l'utilisateur dispose d'une carte prépayée pour accéder à un service de téléphonie via un réseau de communication d'un opérateur, l'utilisateur doit pouvoir accéder à un site web pour pouvoir recharger sa carte prépayée lorsque le montant de la carte prépayée est nul. L'accès au site web pour pouvoir recharger une carte prépayée doit alors pouvoir être fourni à l'utilisateur gratuitement. Un tel accès est mis en oeuvre via des échanges selon le protocole DNS à travers le réseau de communication car en général les échanges DNS entre terminaux et serveurs sont gratuits.

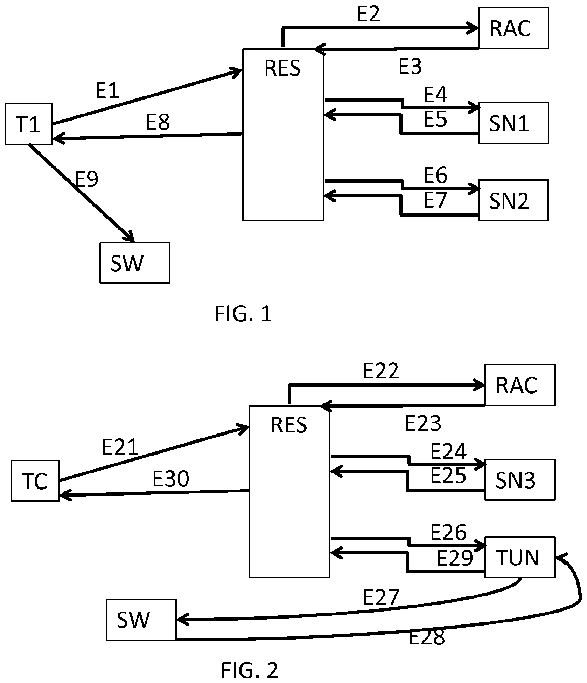

Le protocole DNS est généralement utilisé pour permettre aux applications, telles que la navigation Internet ou les courriels, d'utiliser des noms, tels que *exemple.fr* par exemple, pour fonctionner, plutôt que des adresses IP difficiles à mémoriser et qui peuvent parfois changer. Par exemple, en référence avec la figure 1, lorsqu'un utilisateur entre sur le navigateur web de son terminal (T1) le nom de domaine *exemple.fr,* une requête DNS est envoyée (E1) à un serveur de résolution DNS (RES).

Le serveur de résolution DNS vérifie si sa mémoire cache contient déjà l'adresse IP correspondant au nom de domaine *exemple.fr.* Si c'est le cas, le serveur de résolution DNS renvoie (E8) une réponse DNS comprenant l'adresse IP du nom de domaine *exemple.fr* au navigateur du terminal (T1) de l'utilisateur. Le navigateur peut alors envoyer (E9) une requête HTTP à l'adresse IP reçue afin d'avoir accès au service fourni par un serveur (SW) à cette adresse IP.

Si la mémoire cache du serveur de résolution DNS (RES) ne contient pas l'adresse IP du nom de domaine *exemple.fr,* le serveur de résolution DNS (RES) envoie (E2) une nouvelle demande à un serveur racine (RAC) pour trouver quel serveur (SN1) contrôle le domaine de premier niveau .*fr*. Cette nouvelle demande émise par le serveur de résolution DNS (RES) et les suivantes sont communément appelées des requêtes récursives. En réponse à cette nouvelle demande, le serveur racine (RAC) envoie (E3) au serveur DNS (RES) l'adresse IP du serveur (SN1) contrôlant le domaine de premier niveau *.fr.* Le serveur de résolution DNS (RES) envoie alors (E4) une nouvelle demande au serveur (SN1), pour obtenir (E5) l'adresse IP du serveur (SN2) qui contrôle le domaine *exemple.fr.* Ensuite, le serveur de résolution DNS (RES) envoie (E6) une nouvelle demande au serveur (SN2) qui contrôle le domaine *exemple.fr* pour obtenir (E7) l'adresse IP pour le nom de domaine: *exemple.fr.* Ensuite, le serveur de résolution DNS (RES) renvoie (E8) au navigateur du terminal (T1) de l'utilisateur une réponse DNS comprenant l'adresse IP du nom de domaine *exemple.fr.*

Avec un tel système hiérarchique, un propriétaire d'un domaine peut ainsi définir les serveurs d'autorité pour son domaine, i.e. les serveurs contrôlant le domaine. Ainsi, la destination finale recevant les requêtes DNS pour ce domaine est contrôlée par le propriétaire du domaine.

Certains utilisateurs malveillants utilisent le protocole DNS afin d'accéder à des services, via le réseau de communication, sans avoir à payer pour accéder au réseau de communication. Par exemple, ces utilisateurs peuvent "surfer", i.e. naviguer, sur l'Internet gratuitement ou accéder à des services via des sites web sans payer pour l'accès au réseau de communication ou l'utilisation de la bande passante.

De tels utilisateurs utilisent le mécanisme de tunnel DNS (DNS tunneling en anglais) qui permet d'encapsuler un autre protocole dans des échanges DNS.

En référence à la figure 2, un tel mécanisme de tunnel DNS comprend un domaine contrôlé, par exemple "mytunnel.com", un serveur de tunnel DNS (TUN), et un terminal client (TC) d'un utilisateur fraudeur. Le domaine contrôlé est utilisé pour définir le serveur autoritaire faisant autorité pour ce domaine. Le serveur de tunnel DNS (TUN) est alors défini comme étant un tel serveur autoritaire faisant autorité pour le domaine contrôlé "mytunnel.com". Le serveur de tunnel DNS (TUN) est généralement un serveur accessible via l'Internet et commandé par l'utilisateur du tunnel DNS.

Le terminal client (TC) initie une requête DNS pour le nom de domaine contrôlé "mytunnel.com" et encode les données qu'il souhaite envoyer dans la charge utile de la requête DNS, par exemple une requête HTTP vers un site web (SW).

Le terminal client (TC) envoie (E21) ensuite la requête DNS pour le nom de domaine contrôlé "mytunnel.com" vers le serveur de résolution DNS (RES). Le nom de domaine demandé "mytunnel.com" n'étant pas dans le cache du serveur de résolution DNS, celui-ci renvoie (E22) la requête vers le serveur racine (RAC) pour trouver quel serveur contrôle le domaine de premier niveau *.com* du nom de domaine demandé. Le serveur racine (RAC) renvoie (E23) au serveur de résolution DNS (RES) l'adresse du serveur (SN3) contrôlant le domaine de premier niveau ".com". Le serveur de résolution DNS (RES) envoie alors (E24) une nouvelle requête au serveur (SN3) pour obtenir (E25) l'adresse du serveur contrôlant le nom de domaine "mytunnel.com". Le serveur de résolution DNS envoie alors (E26) une requête vers le serveur de tunnel DNS (TUN) contrôlant le domaine "mytunnel.com". Le serveur de tunnel DNS (TUN) décode la requête HTTP contenue dans la charge utile de la requête DNS et accède (E27) via l'Internet au serveur (SW) adressé par la requête HTTP, par exemple le site *www.exemple.com.* Le serveur (SW) renvoie (E28) le code HTML d'une page web accessible sur le site *www.exemple.com* par exemple, au serveur de tunnel DNS (TUN). Le serveur de tunnel DNS (TUN) encapsule le code HTML dans un message de réponse DNS de type TXT par exemple et renvoie (E29) la réponse au serveur de résolution DNS (RES) qui la transmet (E30) au terminal client (TC).

Ainsi, l'utilisateur du terminal client (TC) a pu accéder au site web *www.exemple.com* gratuitement via le protocole DNS.

De tels tunnels DNS génèrent du trafic venant perturber le réseau de communication de l'opérateur qui, en outre, n'obtient en contrepartie aucune compensation financière pour l'utilisation de son réseau. L'utilisation de tunnels DNS pour la fraude, notamment sur les réseaux mobiles, représente des pertes de revenus importantes pour l'opérateur.

De plus, le mécanisme de tunnel DNS est également utilisé par des utilisateurs mal intentionnés dans le but de transmettre des applications malveillantes (malware en anglais) à des terminaux d'autres utilisateurs ou de voler des informations sensibles à ces autres utilisateurs.

L'utilisation du mécanisme de tunnel DNS par des personnes malveillantes a donc un impact important tant pour l'opérateur du réseau de communication que pour ses utilisateurs abonnés.

Pour contrôler l'utilisation des tunnels DNS par les personnes malveillantes, il est connu de placer un serveur de contrôle en coupure de flux dans le réseau de communication. Un tel serveur de contrôle analyse alors tous les flux DNS transmis dans le réseau de communication et lors de la détection d'un flux DNS non autorisé, la transmission de ce flux DNS est arrêtée, i.e. la requête DNS n'est pas transmise au serveur de résolution DNS. Cependant, une telle solution est coûteuse et complexe à mettre en œuvre car le serveur de contrôle doit analyser tous les flux DNS transmis dans le réseau de communication. De plus, lorsque le serveur de contrôle est hors service, par exemple à cause d'une panne, le service DNS dans son ensemble est hors service, impactant alors tous les utilisateurs du réseau de communication. La demande de brevet US2016/099852 A1 divulgue un système DNS pour bloquer les flux faisant partie d'un tunnel DNS.

### 3. Exposé de l'invention

L'invention vient améliorer l'état de la technique. A cet effet, elle concerne un procédé de contrôle d'un flux de données transmis selon le protocole DNS, selon la revendication 1.

La vérification d'au moins un critère prédéterminé par un module de contrôle permet de détecter si la requête DNS reçue est une requête frauduleuse, i.e. si elle a été émise par un terminal d'un utilisateur fraudeur et si sa destination finale doit être le serveur autoritaire pour le nom de domaine compris dans la requête DNS. Par serveur autoritaire, on entend ici le serveur faisant autorité pour ce nom de domaine, i.e. le serveur contrôlant le nom de domaine frauduleux.

L'invention permet ainsi, lors de la détection d'un flux DNS issu d'une fraude, de répondre au terminal ayant émis ce flux DNS avant la réponse attendue par le terminal de l'utilisateur fraudeur. Ainsi, une réponse incorrecte est envoyée au terminal de l'utilisateur fraudeur, i.e. avec un contenu non attendu par le terminal de l'utilisateur fraudeur. La réponse envoyée par le serveur de résolution DNS ne comprend ainsi pas les informations demandées par le terminal dans sa requête DNS.

Cependant, la réponse DNS générée par le module de contrôle doit être valide du point de vue du serveur de résolution DNS afin que celui-ci puisse retransmettre la réponse au terminal de l'utilisateur fraudeur, sans nécessité de modifications du serveur de résolution DNS.

Lorsque le serveur de résolution DNS reçoit ultérieurement une réponse à la requête DNS en provenance d'un serveur autoritaire, cette réponse n'est alors pas prise en compte par le serveur de résolution DNS qui a déjà envoyé une réponse au terminal.

Selon un mode particulier de réalisation de l'invention, ladite requête DNS émise par le terminal est reçue par le serveur de résolution DNS et transmise audit module de contrôle par ledit serveur de résolution DNS. Dans ce mode de réalisation, le module de contrôle est placé en coupure de flux entre le serveur de résolution DNS et le serveur autoritaire.

Selon un autre mode particulier de réalisation de l'invention, la réponse envoyée par le module de contrôle comprend la question comprise dans la requête DNS reçue par le module de contrôle et éventuellement une réponse sélectionnée aléatoirement. La réponse reçue par le terminal de l'utilisateur fraudeur comprend ainsi une réponse non attendue par l'utilisateur fraudeur.

Selon un autre mode particulier de réalisation de l'invention, ledit au moins un critère prédéterminé vérifie le type de la requête DNS reçue.

Selon un autre mode particulier de réalisation de l'invention, lorsque le type de la requête DNS est un type TXT selon le protocole DNS, l'étape de vérification dudit au moins un critère prédéterminé comprend en outre la détermination de la longueur du nom de domaine demandé dans la requête DNS, ledit critère prédéterminé étant vérifié dans le cas où la longueur du nom de domaine demandé est supérieure à un seuil prédéterminé.

Le type TXT d'une requête DNS est souvent utilisé par certains fournisseurs de services pour mettre à jour des informations relatives à ces services, telles que la signature d'un fournisseur d'antivirus, ou des notifications de mises à jour. Cet usage est parfaitement valide car ici il ne s'agit pas d'établir un tunnel de communication entre le fournisseur de services et un terminal d'un utilisateur via la requête DNS.

Dans le mécanisme de tunnel DNS, plus la longueur du nom de domaine demandé dans la requête DNS est grande, plus le débit utilisé par le terminal de l'utilisateur fraudeur sera grand. Ainsi, la longueur du nom de domaine demandé dans une requête DNS de type TXT permet d'avoir une indication concernant la validité de la requête DNS.

Selon un autre mode particulier de réalisation de l'invention, ledit au moins un critère prédéterminé vérifie le nom de domaine demandé dans la requête DNS reçue par le module de contrôle, à partir d'une liste de noms de domaine légitimes, ledit au moins un critère prédéterminé étant vérifié lorsque le nom de domaine demandé n'appartient pas à ladite liste.

Selon un autre mode particulier de réalisation de l'invention, ledit au moins un critère prédéterminé vérifie si le nom de domaine demandé dans la requête DNS appartient à une liste noire de noms de domaines illégitimes.

Ce mode particulier de réalisation de l'invention permet ainsi d'avoir un premier niveau de détection rapide de requêtes DNS illégitimes. D'autres critères peuvent ensuite être vérifiés si le nom de domaine demandé dans la requête DNS n'appartient pas à la liste noire.

Selon un autre mode particulier de réalisation de l'invention, lorsque ladite requête DNS vérifie un critère prédéterminé selon l'un quelconque des modes de réalisation décrits ci-dessus, le nom de domaine demandé est ajouté dans ladite liste noire de noms de domaines illégitimes. Ce mode particulier de réalisation de l'invention permet ainsi de mettre à jour la liste noire de noms de domaine qui sont utilisés pour frauder, à partir de la détection via d'autres critères prédéterminés.

Selon un autre mode particulier de réalisation de l'invention, la vérification dudit au moins un critère prédéterminé est mise en œuvre uniquement lorsque le nom de domaine demandé dans la requête DNS n'est pas présent dans un cache du serveur de résolution DNS. Avantageusement, ce mode particulier de réalisation de l'invention permet de limiter le nombre de requêtes DNS à analyser tout en restant efficace en terme de détection des requêtes DNS non valides. En effet, en général, la plupart des noms de domaine demandés dans une requête DNS sont contenus dans le cache du serveur de résolution DNS. Seule une petite partie, environ 5%, des requêtes DNS reçues par le serveur de résolution DNS nécessite l'envoi de requêtes récursives vers des serveurs autoritaires pour obtenir la réponse appropriée à la requête DNS.

Dans le cas du mécanisme de tunnel DNS, la réponse demandée n'est jamais dans le cache du serveur de résolution DNS, puisque le but du tunnel est de s'adresser à un serveur autoritaire participant à la fraude. De plus, les utilisateurs fraudeurs modifient souvent le nom de domaine contrôlé pour la fraude pour éviter justement que ce nom de domaine soit mis en cache.

Ce mode de réalisation permet de ne pas impacter le service de résolution DNS dans son ensemble, ou tout au plus d'impacter seulement le trafic DNS du réseau pour lequel le nom de domaine n'est pas en cache du serveur de résolution DNS.

Les différents modes ou caractéristiques de réalisation précités peuvent être ajoutés indépendamment ou en combinaison les uns avec les autres, aux étapes du procédé de contrôle de flux de données défini ci-dessus.

L'invention concerne aussi un système de contrôle d'un flux de données transmis selon le protocole DNS, le système comprenant un serveur de résolution DNS et un module de contrôle, selon la revendication 10.

Selon un mode particulier de réalisation de l'invention, ledit module de contrôle est placé entre le serveur de résolution DNS et le serveur autoritaire. Ainsi, seules les requêtes DNS pour lesquelles le serveur de résolution DNS n'a pas de réponse en cache, seront examinées par le module de contrôle. Selon un mode particulier de réalisation de l'invention, le module de contrôle est compris dans un terminal.

Selon un autre mode particulier de réalisation de l'invention, le module de contrôle est compris dans un serveur de résolution DNS.

L'invention concerne également un programme d'ordinateur comportant des instructions pour la mise en œuvre du procédé de contrôle selon l'un quelconque des modes particuliers de réalisation décrits précédemment, lorsque ledit programme est exécuté par un processeur. Un tel programme peut utiliser n'importe quel langage de programmation. Il peut être téléchargé depuis un réseau de communication et/ou enregistré sur un support lisible par ordinateur. Le procédé de contrôle selon l'invention peut être mis en œuvre de diverses manières, notamment sous forme câblée ou sous forme logicielle.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 illustre des étapes d'un procédé de résolution d'adresse selon le protocole DNS selon l'art antérieur déjà expliqué ci-dessus;
- la figure 2 illustre des étapes d'un procédé mettant en œuvre un mécanisme de tunnel DNS selon l'art antérieur déjà expliqué ci-dessus;
- la figure 3 illustre des étapes du procédé de contrôle d'un flux de données selon le protocole DNS selon un mode particulier de réalisation de l'invention;
- la figure 4 illustre des étapes du procédé de contrôle d'un flux de données selon le protocole DNS selon un autre mode particulier de réalisation de l'invention;
- la figure 5 présente la structure simplifiée d'un dispositif de contrôle adapté pour mettre en œuvre le procédé de contrôle selon un mode particulier de réalisation de l'invention.

### 5. Description d'un mode de réalisation de l'invention

### 5.1 Principe général

Le principe général de l'invention est de contrôler les flux de données émis selon le protocole DNS lorsque ces flux de données sont émis par des terminaux d'utilisateurs malveillants qui veulent contourner les mécanismes de facturation des opérateurs de réseaux de communication ou des fournisseurs de services.

Pour cela, sur réception d'une requête DNS comprenant une question relative à un nom de domaine adressée à un serveur de résolution DNS, le procédé de contrôle selon l'invention vérifie si la requête DNS satisfait un critère prédéterminé, visant à détecter la fraude, et génère une réponse à la requête DNS. Une telle réponse est ensuite envoyée à l'émetteur de la requête DNS avant la réception par le serveur de résolution DNS d'une réponse à une requête DNS récursive envoyée à un serveur autoritaire. Ainsi, l'utilisateur malveillant ne reçoit pas la réponse attendue et le procédé visant à contourner les mécanismes de facturation échoue.

### 5.2 Exemples de mise en œuvre

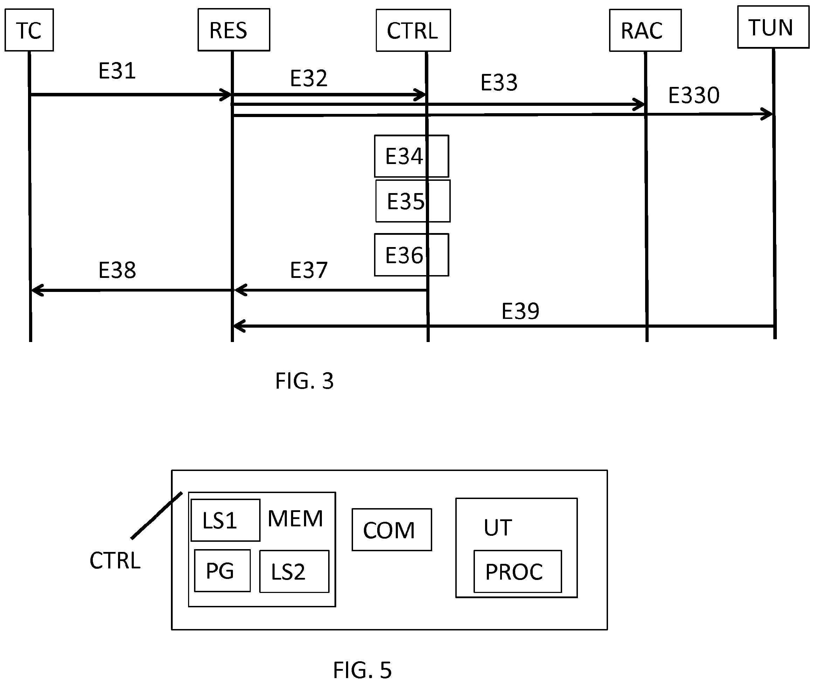

La figure 3 illustre des étapes du procédé de contrôle d'un flux de données selon le protocole DNS selon un mode particulier de réalisation de l'invention. Un tel procédé est par exemple mis en œuvre par un module de contrôle CTRL compris dans un serveur ou un terminal (non représenté) placé en coupure des flux DNS, i.e. sur le chemin des flux DNS dans un réseau de communication entre un terminal TC et un ou des serveurs racines de résolution DNS.

De manière préférentielle, le module de contrôle CTRL est dans un serveur placé après un serveur de résolution DNS désigné par la référence RES sur la figure 3. Ainsi, le module de contrôle CTRL ne vérifie que les requêtes DNS pour lesquelles le serveur RES de résolution DNS n'a pas mémorisé une réponse dans son cache.

De manière alternative, le module de contrôle CTRL est compris dans un des serveurs RES de résolution DNS d'un réseau de communication.

Lors d'une étape E31, le terminal TC d'un utilisateur fraudeur émet une requête DNS à destination d'un serveur de résolution DNS RES. Une telle requête DNS comprend notamment une question relative à un nom de domaine, par exemple *www.exemple.fr,* que le serveur de résolution DNS doit résoudre, i.e. pour lequel le serveur DNS doit fournir une adresse IP.

Selon un mode particulier de réalisation de l'invention, lors de l'étape E31, ladite requête DNS est reçue par le serveur de résolution DNS RES. Lors d'une étape E32, le serveur de résolution DNS RES vérifie que le nom de domaine compris dans la requête DNS n'est pas mémorisé dans le cache du serveur RES. Si le nom de domaine compris dans la requête DNS n'est pas mémorisé dans le cache du serveur RES, lors de l'étape E32, le serveur de résolution DNS RES envoie ladite requête DNS au module de contrôle CTRL. Toujours au cours de l'étape E32, le module de contrôle CTRL reçoit ladite requête DNS. Lors d'une étape E33, le serveur de résolution DNS RES envoie de manière classique à un serveur racine RAC une requête DNS récursive basée sur la requête DNS reçue. Cette étape est similaire à l'étape E2 de la figure 1 ou E22 de la figure 2.

De manière alternative, le serveur de résolution DNS RES peut envoyer une seule requête DNS récursive qui est alors transmise au module de contrôle CTRL par un routeur du réseau de communication placé après le serveur RES de résolution DNS via un mécanisme de "mirroring" (miroir en français). Dans ce cas, le routeur transmet la requête DNS récursive à la fois au module de contrôle CTRL et à destination d'un serveur racine RAC du réseau de communication ou d'un serveur de contrôle d'un nom de domaine.

De manière classique, lors d'une étape E330, la requête DNS récursive est transmise par le serveur RES de résolution DNS à destination du serveur de tunnel TUN, tel que discuté en relation avec la figure 2. Pour plus de clarté, les différents échanges entre le serveur RES de résolution DNS et les différents serveurs autoritaires tels que décrits en relation avec la figure 2 ne sont pas repris ici.

Lors d'une étape E34, le module de contrôle CTRL vérifie si ladite requête DNS satisfait au moins un critère prédéterminé. Un tel critère vise à détecter si la requête DNS est une requête de contournement du système de facturation de l'opérateur du réseau de communication. Le module de contrôle CTRL peut vérifier un ou plusieurs critères de manière successive selon un ordre prédéterminé ou en parallèle. Dès qu'un critère est satisfait, i.e. dès qu'il est détecté que la requête DNS est une requête frauduleuse via un des critères possibles, le procédé passe à l'étape E36. Selon d'autres modes de réalisation, dès qu'un critère est satisfait, le procédé peut continuer à vérifier d'autres critères afin de confirmer le caractère frauduleux de la requête DNS. Ce mode de réalisation permet de limiter le nombre de fausses détections.

Selon des modes particuliers de réalisation de l'invention, différents critères peuvent être vérifiés.

Selon un premier exemple, le module de contrôle CTRL comprend dans une mémoire une liste noire de noms de domaines illégitimes. De tels noms de domaine illégitimes ont au préalable été configurés par l'opérateur du réseau de communication. La liste noire est ensuite mise à jour à partir de noms de domaine détectés comme frauduleux. Le module de contrôle CTRL vérifie alors si le nom de domaine *www.exemple.fr* compris dans la requête DNS appartient à la liste noire. Si c'est le cas, le procédé passe à l'étape E36. Sinon, d'autres critères sont vérifiés.

Selon un autre exemple, le module de contrôle CTRL comprend dans une mémoire une liste blanche de noms de domaines légitimes. De tels noms de domaine légitimes ont au préalable été configurés par l'opérateur du réseau de communication. Le module de contrôle CTRL vérifie alors si le nom de domaine *www.exemple.fr* compris dans la requête DNS appartient à la liste blanche. Si ce n'est pas le cas, la requête DNS est considérée comme frauduleuse, ou éventuellement frauduleuse. Le procédé passe alors à l'étape E36 ou d'autres critères sont vérifiés afin de confirmer le caractère frauduleux de la requête DNS. Selon un autre exemple, le module de contrôle CTRL vérifie le type de la requête DNS reçue. Par exemple, une requête DNS avec un champ type à la valeur "NULL" ou "MB", ou "MG" ou "MR" est uniquement utilisée à des fins expérimentales et n'a donc pas de raisons de transiter dans un réseau de communication opérationnel.

Selon un autre exemple, une requête DNS avec un champ type à la valeur "TXT" ou "WKS" est utilisée par certains fournisseurs de service dans un but bien particulier, par exemple par un mécanisme de notification d'informations ("push") ou de mises à jour de signatures de fournisseurs d'antivirus.

Il est à noter que lorsqu'une requête DNS frauduleuse comporte un type "TXT", la longueur du nom de domaine compris dans la requête est en général excessivement longue. Alors que lorsqu'une requête DNS qui comporte un type "TXT" est valide, i.e. émise par un fournisseur de services autorisé, le nom de domaine est relativement court. En général, une telle requête DNS a une taille de l'ordre de 20-50 octets.

Ainsi, lorsque le type de la requête DNS est un type "TXT", le module de contrôle CTRL détermine en outre la longueur du nom de domaine demandé dans la requête DNS. Dans le cas où la longueur du nom de domaine demandé est supérieure à un seuil prédéterminé, la requête DNS est détectée comme frauduleuse. La longueur du nom de domaine peut être vérifiée soit par le nombre de caractères du nom de domaine demandé, le seuil prédéterminé étant alors un nombre maximal de caractères, soit par le nombre d'octets nécessaires pour représenter le nom de domaine, le seuil prédéterminé étant alors un nombre maximal d'octets, par exemple 100 octets.

Selon un mode particulier de réalisation de l'invention, lorsque la requête DNS est détectée comme frauduleuse à l'étape E34, la liste noire de noms de domaine illégitimes est mise à jour lors d'une étape E35 en ajoutant le nom de domaine *www.exemple.fr* compris dans la requête DNS si celui-ci n'est pas présent.

S'il n'est pas détecté que la requête DNS est une requête frauduleuse, le module de contrôle CTRL ne passe pas à l'étape E36 et le procédé prend fin.

Lors de l'étape E36, le module de contrôle CTRL génère une réponse DNS à la requête DNS. Une telle réponse doit être une réponse valide pour le serveur de résolution DNS RES afin que celui-ci puisse la transmettre au terminal TC de manière transparente. Ainsi, il n'est pas nécessaire de modifier le fonctionnement du procédé de résolution DNS connu.

Ladite réponse DNS comprend également au moins un élément de réponse incorrect à ladite question comprise dans ladite requête DNS reçue.

Selon un mode particulier de réalisation de l'invention, la réponse générée comprend la question initiale comprise dans la requête DNS reçue par le module de contrôle CTRL et éventuellement une réponse sélectionnée aléatoirement. Par exemple, un élément de réponse incorrect peut être une adresse IP nulle, ou une adresse IP avec une partie manquante. Selon un autre exemple, une liste d'adresses IP incorrectes peut être définie par l'opérateur. De telles adresses peuvent par exemple pointer sur des pages blanches ou comprenant du code source non interprétable par le navigateur du terminal TC, ou encore du code source comprenant des erreurs. Une adresse IP parmi cette liste peut alors être sélectionnée de manière aléatoire. En variante, l'élément de réponse incorrect peut être sélectionné aléatoirement parmi: l'adresse IP nulle, l'adresse IP avec une partie manquante ou une adresse IP de la liste précitée.

Lors d'une étape E37, le module de contrôle CTRL envoie au serveur de résolution DNS RES la réponse DNS générée. Cet envoi est mis en œuvre avant que le serveur de résolution DNS RES reçoive (étape E39) une réponse en provenance du serveur autoritaire TUN en réponse à la requête DNS récursive transmise à l'étape E330.

Lors de l'étape E37, le serveur de résolution DNS RES reçoit la réponse générée, avant la réponse émise par le serveur TUN.

Lors d'une étape E38, le serveur de résolution DNS RES transmet alors au terminal TC la réponse générée par le module de contrôle CTRL.

Lors de l'étape E39, lorsque le serveur de résolution DNS RES reçoit la réponse émise par le serveur TUN, il ne traite pas cette réponse car une réponse DNS a déjà été transmise par le serveur RES au terminal TC.

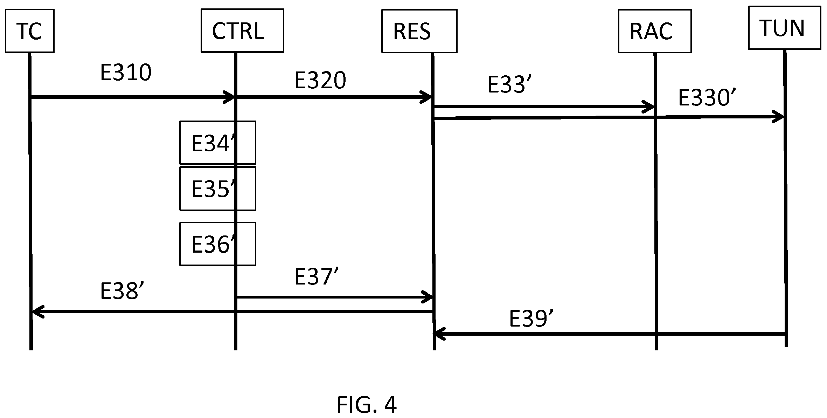

La figure 4 illustre des étapes du procédé de contrôle d'un flux de données selon le protocole DNS selon un autre mode particulier de réalisation de l'invention. Le procédé de contrôle est ici mis en œuvre par un module de contrôle CTRL placé entre le terminal TC et le serveur RES de résolution DNS.

Lors d'une étape E310, le terminal TC d'un utilisateur fraudeur émet une requête DNS à destination d'un serveur de résolution DNS RES. Une telle requête DNS comprend notamment une question relative à un nom de domaine, par exemple *www.exemple.fr,* que le serveur de résolution DNS doit résoudre, i.e. pour lequel le serveur DNS doit fournir une adresse IP.

Dans ce mode de réalisation de l'invention, selon une variante, le module de contrôle CTRL intercepte (étape E310) toutes les requêtes DNS transmises dans le réseau de communication à destination du serveur RES de résolution DNS et les transmet (étape E320) ensuite au serveur RES de résolution DNS.

Selon une autre variante, les requêtes DNS sont transmises au serveur RES de résolution DNS et au module de contrôle CTRL par un routeur du réseau de communication (non représenté) via un mécanisme de "mirroring".

Les étapes E33'-E39' et E330' sont identiques aux étapes E33-E39 et E330 respectivement décrites en relation avec la figure 3.

La figure 5 présente la structure simplifiée d'un dispositif de contrôle CTRL adapté pour mettre en œuvre le procédé de contrôle selon l'un quelconque des modes particuliers de réalisation de l'invention décrits en relation avec la figure 3 ou la figure 4.

Le dispositif de contrôle CTRL comprend une mémoire MEM, une unité de traitement UT, équipée par exemple d'un processeur PROC, et pilotée par le programme d'ordinateur PG stocké en mémoire MEM. Le programme d'ordinateur PG comprend des instructions pour mettre en œuvre les étapes du procédé de contrôle tel que décrit précédemment, lorsque le programme est exécuté par le processeur PROC.

A l'initialisation, les instructions de code du programme d'ordinateur PG sont par exemple chargées dans une mémoire RAM avant d'être exécutées par le processeur PROC. Le processeur PROC de l'unité de traitement UT met notamment en œuvre les étapes du procédé de contrôle décrit en relation avec la figure 3 selon les instructions du programme d'ordinateur PG.

Pour cela, le dispositif de contrôle comprend un module de communication COM configuré pour recevoir une requête DNS émise par un terminal et destinée à un serveur de résolution DNS, ladite requête DNS comprenant une question relative à un nom de domaine. L'unité de traitement est configurée pour vérifier si ladite requête DNS satisfait au moins un critère prédéterminé, et lorsque ladite requête DNS vérifie ledit au moins un critère prédéterminé, l'unité de traitement génère une réponse DNS valide pour le serveur de résolution DNS, ladite réponse DNS comprenant au moins un élément de réponse incorrect à ladite question comprise dans ladite requête DNS reçue. Le module de communication COM est également configuré pour envoyer audit serveur de résolution DNS ladite réponse DNS générée, l'envoi étant mis en œuvre avant la réception, par le serveur de résolution DNS, d'une réponse reçue en provenance d'un serveur autoritaire en réponse à ladite requête DNS.

Selon un mode particulier de réalisation de l'invention, la mémoire MEM comprend une liste noire LS1 de noms de domaine illégitimes.

Selon un autre mode particulier de réalisation de l'invention, la mémoire MEM comprend une liste blanche LS2 de noms de domaine légitimes.

Selon un mode particulier de réalisation de l'invention, le dispositif de contrôle CTRL décrit précédemment est compris dans un terminal, ou un serveur ou un serveur de résolution DNS.

## Revendications

1. Procédé de contrôle d'un flux de données transmis selon un protocole de système de noms de domaine, dit DNS, comprenant :
- une étape de réception, par un serveur de résolution DNS (RES), d'une requête DNS émise par un terminal (TC), la requête DNS comprenant une question relative à un nom de domaine,
- une étape d'envoi, par le serveur de résolution DNS (RES), de requêtes récursives à destination de serveurs autoritaires, pour obtenir une réponse appropriée à ladite requête DNS,
- une étape de réception (E39) par le serveur de résolution DNS, d'une réponse en provenance du serveur autoritaire faisant autorité pour ledit nom de domaine, en réponse à une desdites requêtes récursives ;
ledit procédé étant **caractérisé en ce qu'**il comprend, avant ladite réception (E39) par le serveur de résolution DNS d'une réponse en provenance du serveur autoritaire faisant autorité pour ledit nom de domaine :
- une étape de réception (E32), par un module de contrôle (CTRL), de ladite requête DNS,
- lorsque ladite requête DNS vérifie au moins un critère prédéterminé,
• une étape de génération (E36) par le module de contrôle d'une réponse DNS valide pour le serveur de résolution DNS, ladite réponse DNS comprenant au moins un élément de réponse incorrect à ladite question comprise dans ladite requête DNS reçue,
• une étape d'envoi (E37) par le module de contrôle audit serveur de résolution DNS, de ladite réponse DNS générée,
• une étape de transmission (E38) par le serveur de résolution DNS audit terminal (TC), de ladite réponse DNS générée par le module de contrôle.

2. Procédé de contrôle selon la revendication 1, dans lequel ladite requête DNS émise par le terminal est reçue par le serveur de résolution DNS et transmise audit module de contrôle par ledit serveur de résolution DNS.

3. Procédé de contrôle selon l'une quelconque des revendications 1 ou 2, dans lequel la réponse envoyée par le module de contrôle comprend la question comprise dans la requête DNS reçue par le module de contrôle et éventuellement une réponse sélectionnée aléatoirement.

4. Procédé de contrôle selon l'une quelconque des revendications 1 à 3, dans lequel ledit au moins un critère prédéterminé vérifie le type de la requête DNS reçue.

5. Procédé de contrôle selon la revendication 4, dans lequel, lorsque le type de la requête DNS est un type TXT selon le protocole DNS, ledit au moins un critère prédéterminé est vérifié comme suit:
- détermination de la longueur du nom de domaine demandé dans la requête DNS,
- dans le cas où la longueur du nom de domaine demandé est supérieure à un seuil prédéterminé, ledit critère prédéterminé est vérifié.

6. Procédé de contrôle selon la revendication 1, dans lequel ledit au moins un critère prédéterminé vérifie le nom de domaine demandé dans la requête DNS reçue par le module de contrôle, à partir d'une liste de noms de domaine légitimes, ledit au moins un critère prédéterminé étant vérifié lorsque le nom de domaine demandé n'appartient pas à ladite liste.

7. Procédé de contrôle selon la revendication 1, dans lequel ledit au moins un critère prédéterminé vérifie si le nom de domaine demandé dans la requête DNS appartient à une liste noire de noms de domaines illégitimes.

8. Procédé de contrôle selon la revendication 6, dans lequel lorsque ladite requête DNS vérifie un critère prédéterminé selon l'une quelconque des revendications 3 à 5, le nom de domaine demandé est ajouté dans ladite liste noire de noms de domaines illégitimes.

9. Procédé de contrôle selon la revendication 1, dans lequel l'étape de vérification dudit au moins un critère prédéterminé est mise en œuvre uniquement lorsque le nom de domaine demandé dans la requête DNS n'est pas présent dans un cache du serveur de résolution DNS.

10. Système de contrôle d'un flux de données transmis selon le protocole DNS, ledit système comprenant :
- un serveur de résolution DNS comprenant :
- des moyens de réception d'une requête DNS émise par un terminal (TC), la requête DNS comprenant une question relative à un nom de domaine,
- des moyens d'envoi de requêtes récursives à destination de serveurs autoritaires, pour obtenir une réponse appropriée à ladite requête DNS,
- des moyens de réception d'une réponse en provenance du serveur autoritaire faisant autorité pour ledit nom de domaine, en réponse à une desdites requêtes récursives ;
- un module de contrôle (CTRL) comprenant :
- un module de communication (COM) configuré pour recevoir ladite requête DNS,
- un module de traitement (UT) configuré pour vérifier que ladite requête DNS vérifie au moins un critère prédéterminé et, lorsque ladite requête DNS vérifie au moins ledit critère prédéterminé :
ledit module de traitement est configuré pour générer une réponse DNS valide pour le serveur de résolution DNS, ladite réponse DNS comprenant au moins un élément de réponse incorrect à ladite question comprise dans ladite requête DNS reçue, et
ledit module de communication est configuré pour envoyer audit serveur de résolution DNS ladite réponse DNS générée,
ledit serveur de résolution DNS comprenant en outre des moyens de transmission audit terminal (TC), de ladite réponse DNS générée par le module de contrôle, et
ledit module de contrôle (CTRL) et ledit serveur de résolution DNS étant en outre configurés pour que :
- lesdits réception, vérification, génération et envoi par le module de contrôle, et
- ladite transmission par le serveur de résolution DNS audit terminal (TC), de ladite réponse DNS générée par le module de contrôle
soient mis en œuvre avant la réception, par le serveur de résolution DNS, d'une réponse en provenance du serveur autoritaire faisant autorité pour ledit nom de domaine.

11. Système de contrôle selon la revendication 10, dans lequel ledit module de contrôle est placé entre le serveur de résolution DNS et le serveur autoritaire.

12. Système de contrôle selon l'une quelconque des revendications 10 ou 11, dans lequel le module de contrôle est compris dans le terminal.

13. Système de contrôle selon la revendication 10, dans lequel le module de contrôle est compris dans le serveur de résolution DNS.

14. Programme d'ordinateur comportant des instructions pour la mise en œuvre du procédé de contrôle selon l'une quelconque des revendications 1 à 9, lorsque ledit programme est exécuté par un processeur.

## Patentansprüche

1. Verfahren zur Kontrolle eines gemäß einem Domain-Name-System-Protokolls, DNS genannt, übertragenen Datenstroms, das enthält:
- einen Schritt des Empfangs einer von einem Endgerät (TC) gesendeten DNS-Anfrage durch einen DNS-Auflösungsserver (RES), wobei die DNS-Anfrage eine Frage betreffend einen Domain-Namen enthält,
- einen Schritt des Sendens von rekursiven Anfragen an autoritative Server durch den DNS-Auflösungsserver (RES), um eine geeignete Antwort auf die DNS-Anfrage zu erhalten,
- einen Schritt des Empfangs (E39) einer vom für den Domain-Namen maßgeblichen autoritativen Server kommenden Antwort durch den DNS-Auflösungsserver als Antwort auf eine der rekursiven Anfragen;
wobei das Verfahren **dadurch gekennzeichnet ist, dass** es vor dem Empfang (E39) einer Antwort vom für den Domain-Namen maßgeblichen autoritativen Server durch den DNS-Auflösungsserver enthält:
- einen Schritt des Empfangs (E32) der DNS-Anfrage durch ein Kontrollmodul (CTRL),
- wenn die DNS-Anfrage mindestens ein vorbestimmtes Kriterium verifiziert,
• einen Schritt der Generierung (E36) einer gültigen DNS-Antwort für den DNS-Auflösungsserver durch das Kontrollmodul, wobei die DNS-Antwort mindestens ein fehlerhaftes Antwortelement auf die in der empfangenen DNS-Anfrage enthaltene Frage enthält,
• einen Schritt des Sendens (E37) der generierten DNS-Antwort an den DNS-Auflösungsserver durch das Kontrollmodul,
• einen Schritt der Übertragung (E38) der vom Kontrollmodul generierten DNS-Antwort an das Endgerät (TC) durch den DNS-Auflösungsserver.

2. Kontrollverfahren nach Anspruch 1, wobei die vom Endgerät gesendete DNS-Anfrage vom DNS-Auflösungsserver empfangen und vom DNS-Auflösungsserver an das Kontrollmodul übertragen wird.

3. Kontrollverfahren nach einem der Ansprüche 1 oder 2, wobei die vom Kontrollmodul gesendete Antwort die in der vom Kontrollmodul empfangenen DNS-Anfrage enthaltene Frage und ggf. eine zufällig ausgewählte Antwort enthält.

4. Kontrollverfahren nach einem der Ansprüche 1 bis 3, wobei das mindestens eine vorbestimmte Kriterium den Typ der empfangene DNS-Anfrage verifiziert.

5. Kontrollverfahren nach Anspruch 4, wobei, wenn der Typ der DNS-Anfrage ein Typ TXT gemäß dem DNS-Protokoll ist, das mindestens eine vorbestimmte Kriterium folgendermaßen verifiziert wird:
- Bestimmung der Länge des in der DNS-Anfrage angeforderten Domain-Namens,
- in dem Fall, in dem die Länge des angeforderten Domain-Namens größer als eine vorbestimmte Schwelle ist, wird das vorbestimmte Kriterium verifiziert.

6. Kontrollverfahren nach Anspruch 1, wobei das mindestens eine vorbestimmte Kriterium den in der vom Kontrollmodul empfangenen DNS-Anfrage angeforderten Domain-Namen ausgehend von einer Liste rechtmäßiger Domain-Namen verifiziert, wobei das mindestens eine vorbestimmte Kriterium verifiziert wird, wenn der angeforderte Domain-Name nicht zu der Liste gehört.

7. Kontrollverfahren nach Anspruch 1, wobei das mindestens eine vorbestimmte Kriterium verifiziert, ob der in der DNS-Anfrage angeforderte Domain-Name zu einer schwarzen Liste unrechtmäßiger Domain-Namen gehört.

8. Kontrollverfahren nach Anspruch 6, wobei, wenn die DNS-Anfrage ein vorbestimmtes Kriterium nach einem der Ansprüche 3 bis 5 verifiziert, der angeforderte Domain-Name zur schwarzen Liste unrechtmäßiger Domain-Namen hinzugefügt wird.

9. Kontrollverfahren nach Anspruch 1, wobei der Schritt der Verifizierung des mindestens einen vorbestimmten Kriteriums nur durchgeführt wird, wenn der in der DNS-Anfrage angeforderte Domain-Name nicht in einem Cache des DNS-Auflösungsservers vorhanden ist.

10. Kontrollsystem eines gemäß dem DNS-Protokoll übertragenen Datenstroms, wobei das System enthält:
- einen DNS-Auflösungsserver, der enthält:
- Einrichtungen zum Empfang einer von einem Endgerät (TC) gesendeten DNS-Anfrage, wobei die DNS-Anfrage eine Frage betreffend einen Domain-Namen enthält,
- Einrichtungen zum Senden rekursiver Anfragen an autoritative Server, um eine geeignete Antwort auf die DNS-Anfrage zu erhalten,
- Einrichtungen zum Empfang einer Antwort vom für den Domain-Namen maßgeblichen autoritativen Server als Antwort auf eine der rekursiven Anfragen;
- ein Kontrollmodul (CTRL), das enthält:
- ein Kommunikationsmodul (COM), das konfiguriert ist, die DNS-Anfrage zu empfangen,
- ein Verarbeitungsmodul (UT), das konfiguriert ist, zu verifizieren, dass die DNS-Anfrage mindestens ein vorbestimmtes Kriterium verifiziert, und wenn die DNS-Anfrage mindestens das vorbestimmte Kriterium verifiziert:
das Verarbeitungsmodul konfiguriert ist, eine gültige DNS-Antwort für den DNS-Auflösungsserver zu generieren, wobei die DNS-Antwort mindestens ein fehlerhaftes Antwortelement auf die in der empfangenen DNS-Anfrage enthaltene Frage enthält, und
das Kommunikationsmodul konfiguriert ist, die generierte DNS-Antwort an den DNS-Auflösungsserver zu senden,
wobei der DNS-Auflösungsserver außerdem Einrichtungen zur Übertragung der vom Kontrollmodul generierten DNS-Antwort an das Endgerät (TC) enthält, und
das Kontrollmodul (CTRL) und der DNS-Auflösungsserver außerdem konfiguriert sind, damit:
- Empfang, Verifizierung, Generierung und Senden durch das Kontrollmodul, und
- Übertragung der vom Kontrollmodul generierten DNS-Antwort an das Endgerät (TC) durch den DNS-Auflösungsserver
vor dem Empfang einer Antwort vom für den Domain-Namen maßgeblichen autoritativen Server durch den DNS-Auflösungsserver durchgeführt werden.

11. Kontrollsystem nach Anspruch 10, wobei das Kontrollmodul zwischen dem DNS-Auflösungsserver und dem autoritativen Server angeordnet ist.

12. Kontrollsystem nach einem der Ansprüche 10 oder 11, wobei das Kontrollmodul im Endgerät enthalten ist.

13. Kontrollsystem nach Anspruch 10, wobei das Kontrollmodul im DNS-Auflösungsserver enthalten ist.

14. Computerprogramm, das Anweisungen zur Durchführung des Kontrollverfahrens nach einem der Ansprüche 1 bis 9 aufweist, wenn das Programm von einem Prozessor ausgeführt wird.

## Claims

1. Method for controlling a data flow transmitted in accordance with a domain name system protocol, called DNS, comprising:
- a step of reception, by a DNS resolution server (RES), of a DNS request sent by a terminal (TC), the DNS request comprising a question relating to a domain name,
- a step of sending, by the DNS resolution server (RES), of recursive requests to authoritative servers, so as to obtain an appropriate response to said DNS request,
- a step of reception (E39), by the DNS resolution server, of a response from the authoritative server acting as authority for said domain name, in response to one of said recursive requests;
said method being **characterized in that** it comprises, prior to said reception (E39) by the DNS resolution server of a response from the authoritative server acting as authority for said domain name:
- a step of reception (E32), by a control module (CTRL), of said DNS request;
- when said DNS request verifies at least one predetermined criterion,
• a step of generation (E36), by the control module, of a valid DNS response for the DNS resolution server, said DNS response comprising at least one incorrect response element to said question contained in said received DNS request,
• a step of sending (E37), by the control module to said DNS resolution server, of said generated DNS response,
• a step of transmission (E38), by the DNS resolution server to said terminal (TC), of said DNS response generated by the control module.

2. Control method according to Claim 1, wherein said DNS request sent by the terminal is received by the DNS resolution server and transmitted to said control module by said DNS resolution server.

3. Control method according to either one of Claims 1 and 2, wherein the response sent by the control module comprises the question contained in the DNS request received by the control module and possibly a randomly selected response.

4. Control method according to any one of Claims 1 to 3, wherein said at least one predetermined criterion verifies the type of the received DNS request.

5. Control method according to Claim 4, wherein, when the type of the DNS request is a TXT type in accordance with the DNS protocol, said at least one predetermined criterion is verified as follows:
- determining the length of the domain name requested in the DNS request,
- if the length of the requested domain name is greater than a predetermined threshold, said predetermined criterion is verified.

6. Control method according to Claim 1, wherein said at least one predetermined criterion verifies the domain name requested in the DNS request received by the control module, based on a list of legitimate domain names, said at least one predetermined criterion being verified when the requested domain name does not belong to said list.

7. Control method according to Claim 1, wherein said at least one predetermined criterion verifies whether the domain name requested in the DNS request belongs to a blacklist of illegitimate domain names.

8. Control method according to Claim 6, wherein, when said DNS request verifies a predetermined criterion according to any one of Claims 3 to 5, the requested domain name is added to said blacklist of illegitimate domain names.

9. Control method according to Claim 1, wherein the step of verifying said at least one predetermined criterion is implemented only when the domain name requested in the DNS request is not present in a cache of the DNS resolution server.

10. System for controlling a data flow transmitted in accordance with the DNS protocol, said system comprising:
- a DNS resolution server comprising:
- reception means for receiving a DNS request sent by a terminal (TC), the DNS request comprising a question relating to a domain name,
- sending means for sending recursive requests to authoritative servers, so as to obtain an appropriate response to said DNS request,
- reception means for receiving a response from the authoritative server acting as authority for said domain name, in response to one of said recursive requests;
- a control module (CTRL) comprising:
- a communication module (COM) configured so as to receive said DNS request,
- a processing module (UT) configured so as to verify that said DNS request verifies at least one predetermined criterion and, when said DNS request verifies at least said predetermined criterion:
said processing module is configured so as to generate a valid DNS response for the DNS resolution server, said DNS response comprising at least one incorrect response element to said question contained in said received DNS request, and
said communication module is configured so as to send said generated DNS response to said DNS resolution server,
said DNS resolution server furthermore comprising transmission means for transmitting said DNS response generated by the control module to said terminal (TC), and
said control module (CTRL) and said DNS resolution server furthermore being configured such that:
- said reception, verification, generation and sending by the control module, and
- said transmission, by the DNS resolution server to said terminal (TC), of said DNS response generated by the control module
are implemented prior to the reception, by the DNS resolution server, of a response from the authoritative server acting as authority for said domain name.

11. Control system according to Claim 10, wherein said control module is located between the DNS resolution server and the authoritative server.

12. Control system according to either one of Claims 10 and 11, wherein the control module is contained within the terminal.

13. Control system according to Claim 10, wherein the control module is contained within the DNS resolution server.

14. Computer program comprising instructions for implementing the control method according to any one of Claims 1 to 9 when said program is executed by a processor.
